# EUROPEAN PATENT APPLICATION

(11) **EP 1 693 851 A1**
(43) Date of publication of application: **23.08.2006**
(21) Application number: 06012142.3
(22) Date of filing: 02.10.2004
(51) Int. Cl.: G11B 27/28, G11B 27/10, G11B 27/30, G11B 27/32, G06F 17/30

(54) **Storage medium storing search information and reproducing apparatus and method**

(30) Priority: 04.10.2003 KR 20030069021; 07.11.2003 KR 20030078643; 10.11.2003 KR 20030079177
(62) Divisional of application: 04256117.5
(71) Applicant: Samsung Electronics Co., Ltd., Suwon-si, Gyeonggi-Do (KR)
(72) Inventor: Kang, Man-seok, Suwon-si, Gyeonggi-do (KR); Jung, Kil Soo, Taean-eup,Hwaseong-si,Gyeonggi-do (KR); Chung, Hyun-kwon, Seoul (KR); Ko, Jung-wan, Suwon-si,Gyeonggi-do (KR); Park, Sung-wook, Mapo-gu, Seoul (KR)
(74) Representative: Davies, Robert Ean

(57) **Abstract**

A storage medium storing search information (640) and a reproducing apparatus for and method of reproducing AV data corresponding to a searching result matching a user's search condition and providing additional functions by using the searching result are provided. The storage medium includes: image data (140); and meta information (112) used to provide an additional function using the image data (140) in a predetermined searched section at a time of searching the predetermined section of the image data (140) and reproducing the image data (140) in the searched section. The meta information (112) includes: search information (640) corresponding to at least one search condition of a scene, character, sound, location, and item; information used to position the searched section and reproduce the image data (140) in the searched section; information used to reproduce additional information (620) associated with the image data (140) in the searched section at a time of reproducing the image data (140) in the searched section; and information used to generate a predetermined event at the time of reproducing image data (140) in the searched section. Accordingly, it is possible to provide various enhanced searching functions using various search keywords. In addition, it is possible to provide various additional functions using search information (640).

## Description

The present invention relates to a storage medium storing search information and an apparatus and method for reproducing audio-visual (AV) data corresponding to a searching result matching a user's search condition and providing additional functions by using the searching result.

Storage media such as DVDs store audio-visual data (AV data; hereinafter, sometimes referred to as "moving picture data") including video and audio data compressed and encoded in accordance with compression standards such as Moving Picture Experts Group (MPEG) standards and subtitles. In addition, the storage media also stores reproduction information such as information on encoding attributes of AV data streams and reproducing orders of the AV data.

Moving pictures stored in the storage medium are sequentially reproduced in accordance with the reproduction information. Sometimes, during reproduction of the AV data, jumping and reproducing are performed in units of chapter of the AV data. In addition, in case of conventional storage media such as DVDs, a searching function capable of changing the reproduction position to a specific position by using part_of_title (PPT) or elapsed time has been provided.

However, in the conventional storage medium there is not provided a function of jumping to an arbitrary scene in response to a user's search condition and reproducing the scene. That is, there is not provided a function of positioning and reproducing an arbitrary position of the moving picture data in response to the user's search condition such as a scene, character, location, item, and sound. Therefore, it is difficult to perform various searching processes.

According to the present invention there is provided an apparatus and method as set forth in the appended claims. Preferred features of the invention will be apparent from the dependent claims, and the description which follows.

The present invention provides a storage medium storing search information and an apparatus and method for reproducing AV data corresponding to a searching result matching a user's search condition and providing additional functions by using the searching result.

According to an aspect of the present invention, there is provided a storage medium storing image data; and meta information used to provide an additional function using the image data in a predetermined searched section at a time of searching the predetermined section of the image data and reproducing the image data in the searched section.

The meta information may include search information corresponding to at least one search condition of a scene, character, sound, location, and item.

The meta information may include information used to position the searched section and reproduce the image data in the searched section.

The meta information may include information used to reproduce additional information associated with the image data in the searched section at a time of reproducing the image data in the searched section.

The meta information may include information used to generate a predetermined event at a time of reproducing the image data in the searched section.

The meta information may belong to a play list mark set, wherein the play list mark set is a set of marks indicating specific positions in a clip corresponding to a play list and the play list is a unit of reproduction of the image data.

The meta information may be recorded in a separated space apart from a play list mark set, wherein the play list mark set is a set of marks indicating specific positions in a clip corresponding to a play list and the play list is a unit of reproduction of the image data.

The meta information may be recorded in a separated space apart from a play list, wherein the play list is a unit of reproduction of the image data.

The meta information may be constructed with text or binary data.

The meta information may include presentation time information of the image data in the searched section.

The meta information may include packet identification information indicating associated additional information and presentation time information of the associated addition information.

The meta information may include an event used to start reproducing the image data in the searched section and/or an event used to end reproducing the image data in the searched section, wherein the event is used as an application program interface for an application program providing a program function or a browsing function.

The event may be information used to continuously reproduce at least one piece of the image data in the searched sections.

The event may be information used to reproduce one of the pieces of the image data in the searched sections and to return to a searching menu for a user's selection at the time of ending reproducing the image data.

According to another aspect of the present invention, there is provided a reproducing apparatus comprising: a searching unit searching a section of image data matching a predetermined search condition with reference to meta information from the aforementioned storage medium; and a reproducing unit reproducing the image data in the searched section and providing the additional function using the image data in the searched section by using the meta information.

According to still another aspect of the present invention, there is provided a reproducing method comprising: searching a section of image data matching a predetermined search condition with reference to meta information from the aforementioned storage medium; and reproducing the image data in the searched section and providing the additional function using the image data in the searched section by using the meta information.

The above and other features and advantages of the present invention will become more apparent by describing in detail exemplary embodiments thereof with reference to the attached drawings in which:
Figures 1A through 1C are views showing correlation of a play list, play list marks, meta information, play items, clip Information, and a clip;
Figures 2A through 5 are views showing functions of positioning and reproducing AV data in a searched section according to a first embodiment of the present invention;

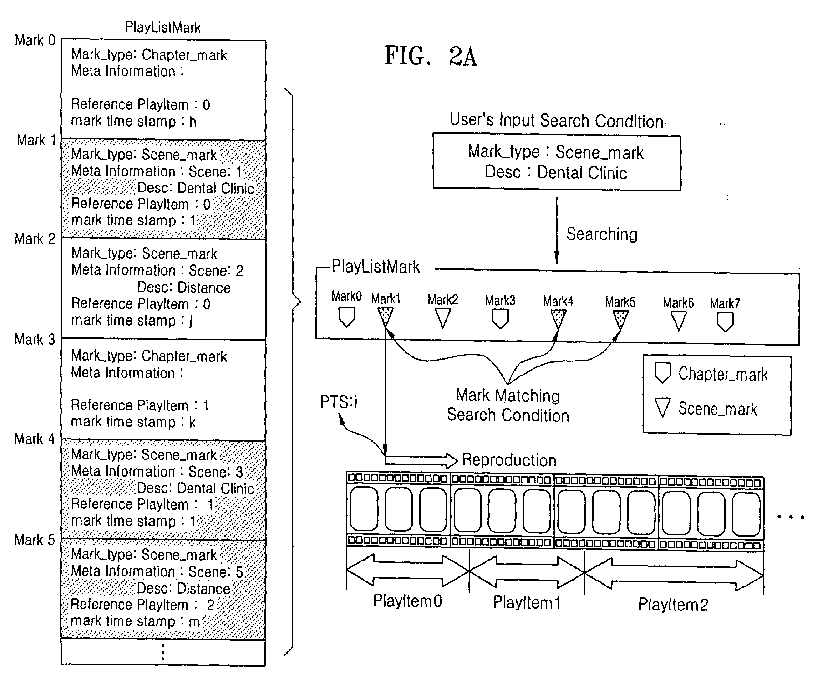

Figure 2A is a view for explaining operations of positioning and reproducing AV data matching a user's search condition in a case where meta information is included in a play list;

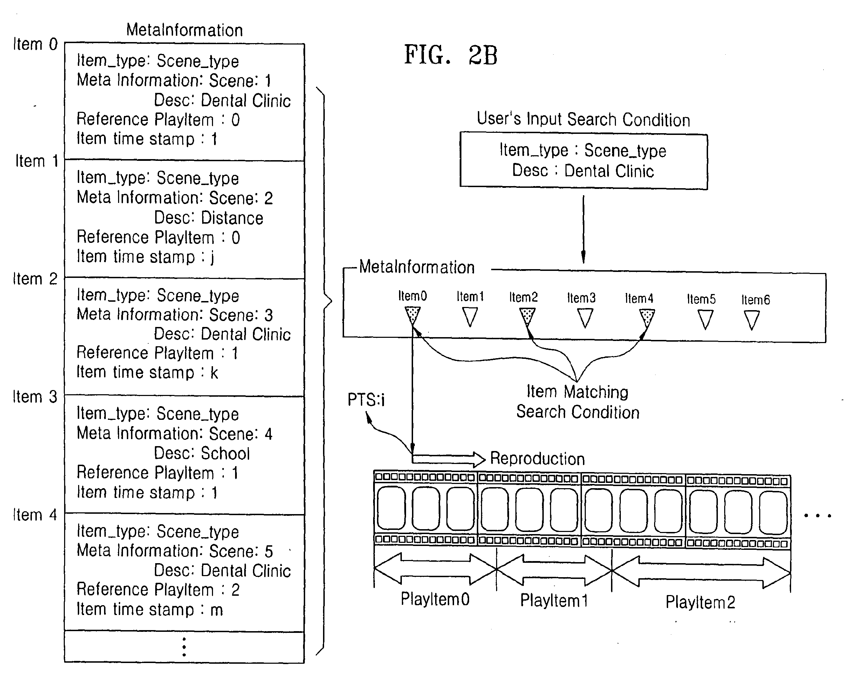

Figure 2B is a view for explaining operations of positioning and reproducing AV data matching a user's search condition in a case where meta information is recorded in a separated space apart from the play list;

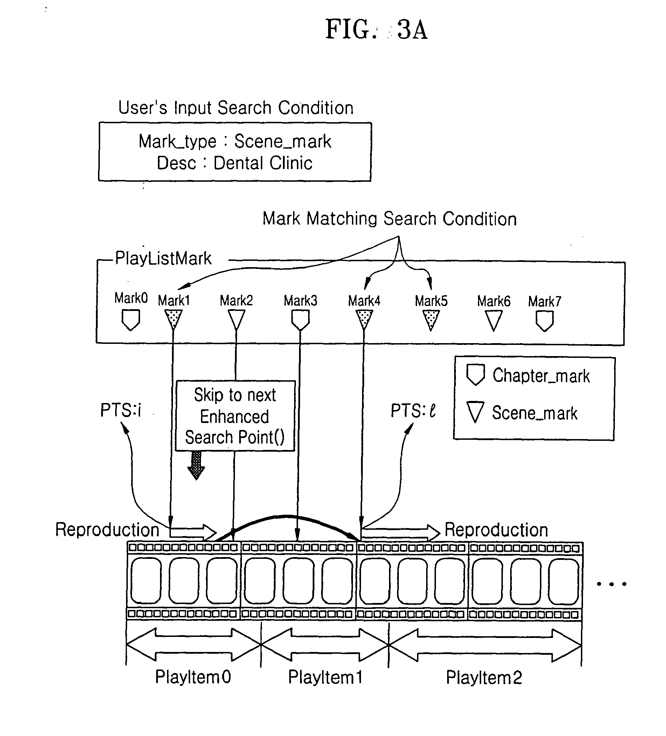

Figure 3A is a view for explaining operations of Skip_to_next_Enhanced _Search_Point( ) in a case where meta information is included in play list marks;

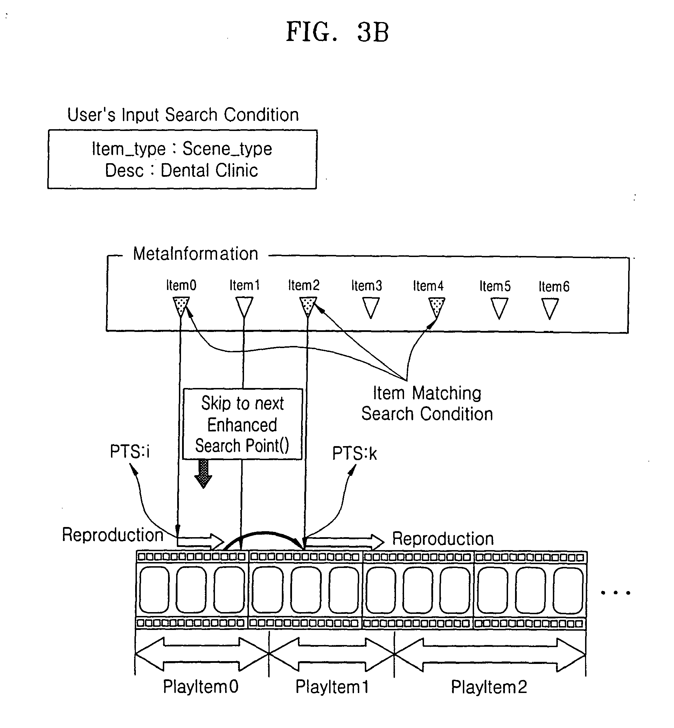

Figure 3B is a view for explaining operations of Skip_to_next_Enhanced _Search_Point( ) in a case where meta information is recorded in a separated space apart from the play list marks;

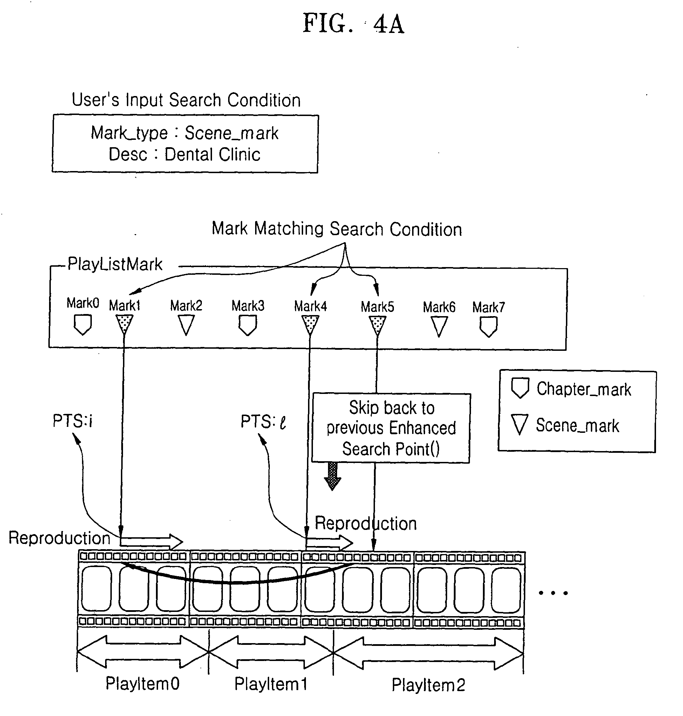

Figure 4A is a view for explaining operations of Skip_back_to_previous_Enhanced_Search_Point( ) in a case where meta information is included in play list marks;

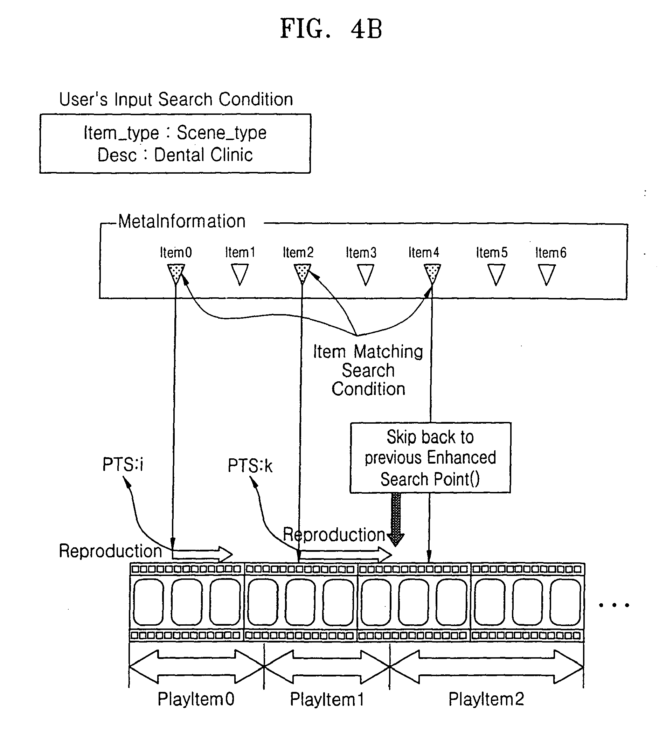

Figure 4B is a view for explaining operations of Skip_back_to_previous_Enhanced_Search_Point( ) in a case where meta information is recorded in a separated space apart from the play list marks;

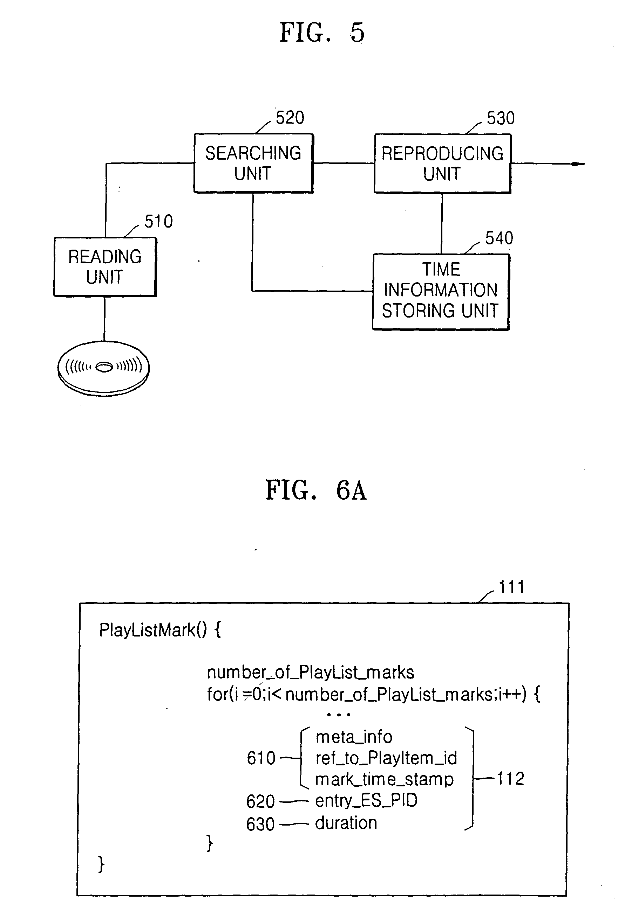

Figure 5 is a block diagram showing a reproducing apparatus for reproducing a storage medium where search information of the present invention is recorded;

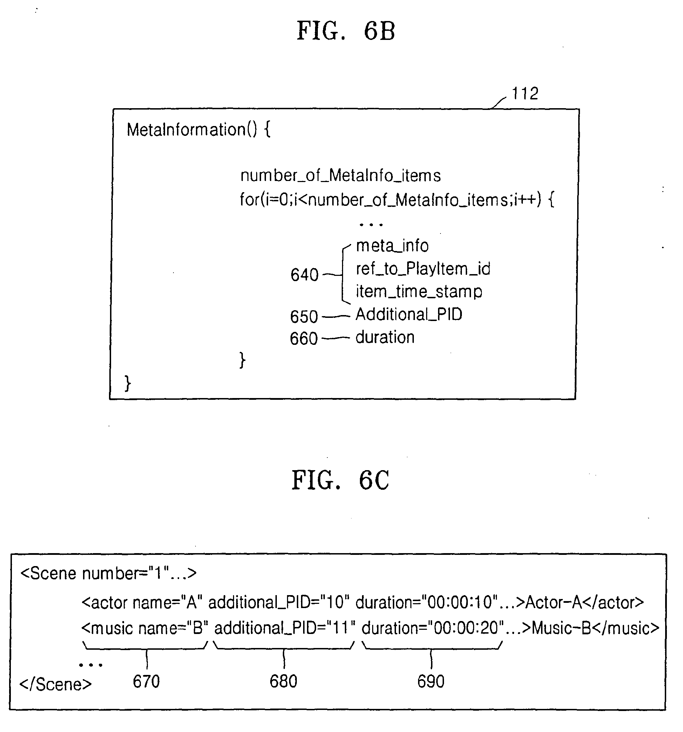

Figures 6 through 12 are views showing functions of reproducing AV data in a searched section and associated additional information according to a second embodiment of the present invention;
Figures 6A through 6C are views showing examples of meta information used for enhanced searching and additional information displaying functions according to the second embodiment of the present invention;

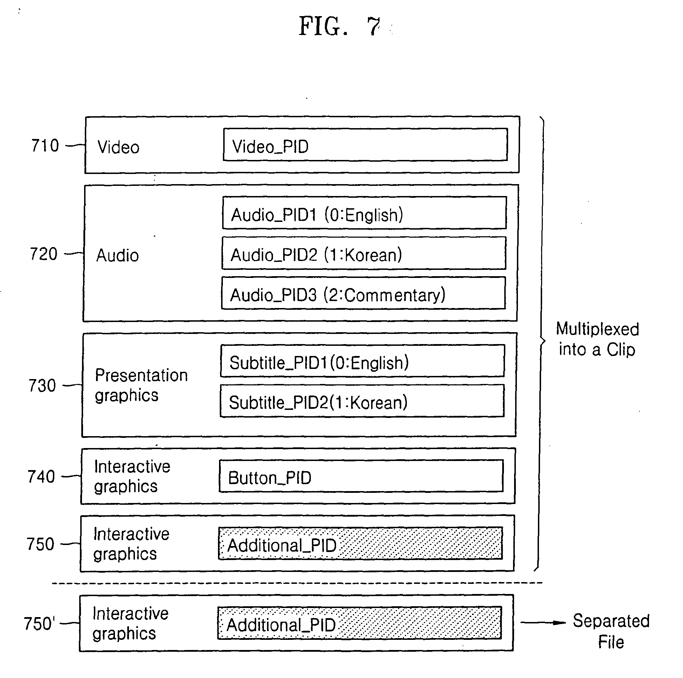

Figure 7 is a view showing an example of moving picture data of a storage medium including additional PID information used for an additional information displaying function according to the second embodiment of the present invention;

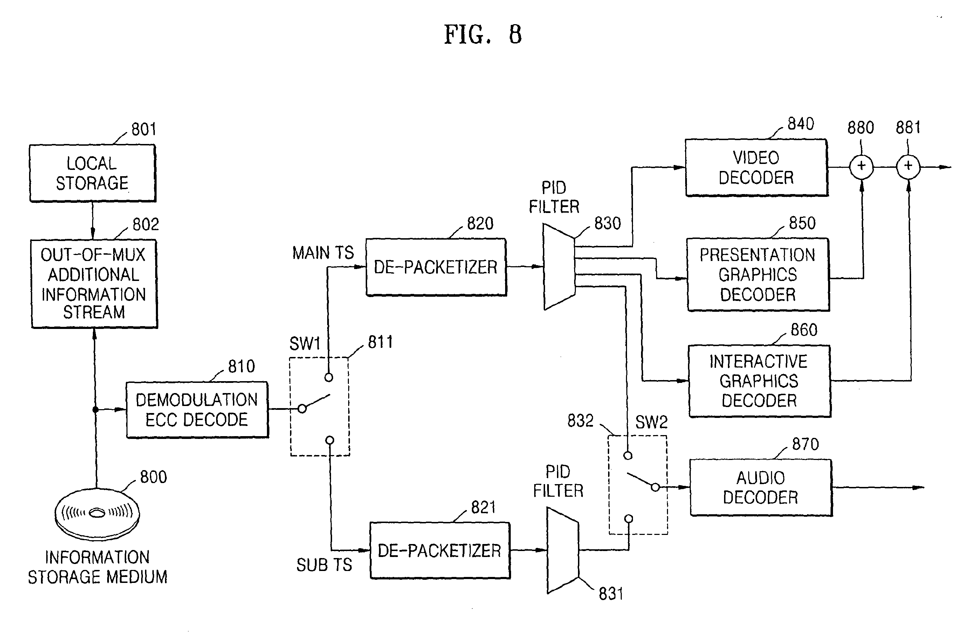

Figure 8 is a schematic view showing a reproducing apparatus according to the second embodiment of the present invention;

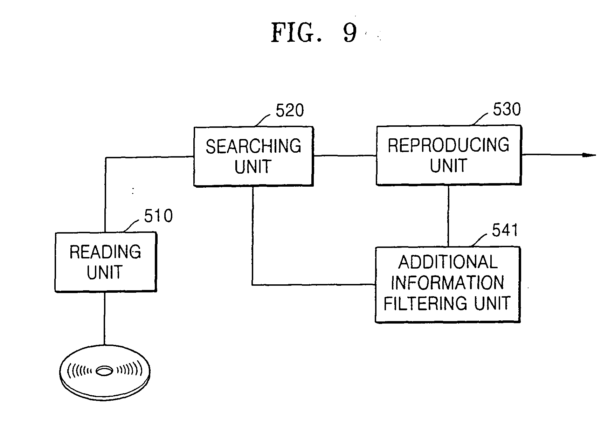

Figure 9 is a block diagram showing a reproducing apparatus used for enhanced searching and additional information displaying functions according to the second embodiment of the present invention;

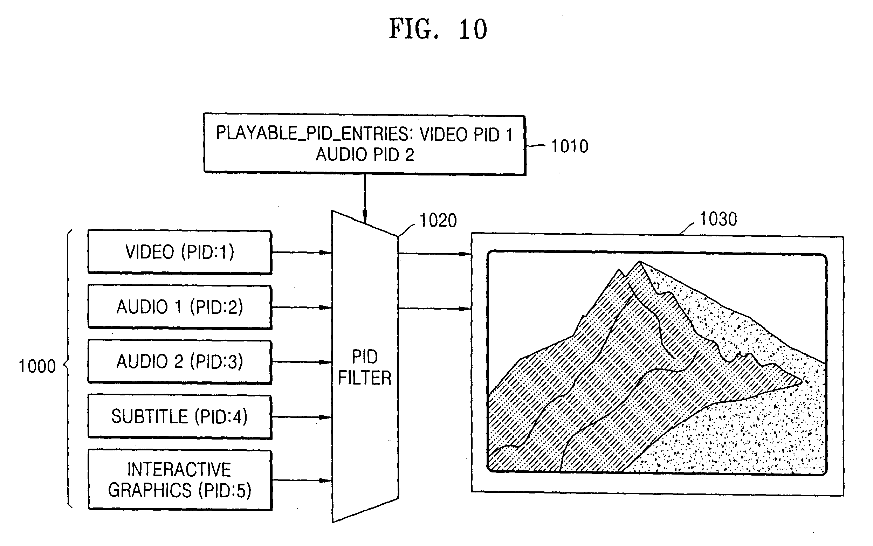

Figure 10 is a view showing an example of a PID filter and a moving picture data stream output therefrom;

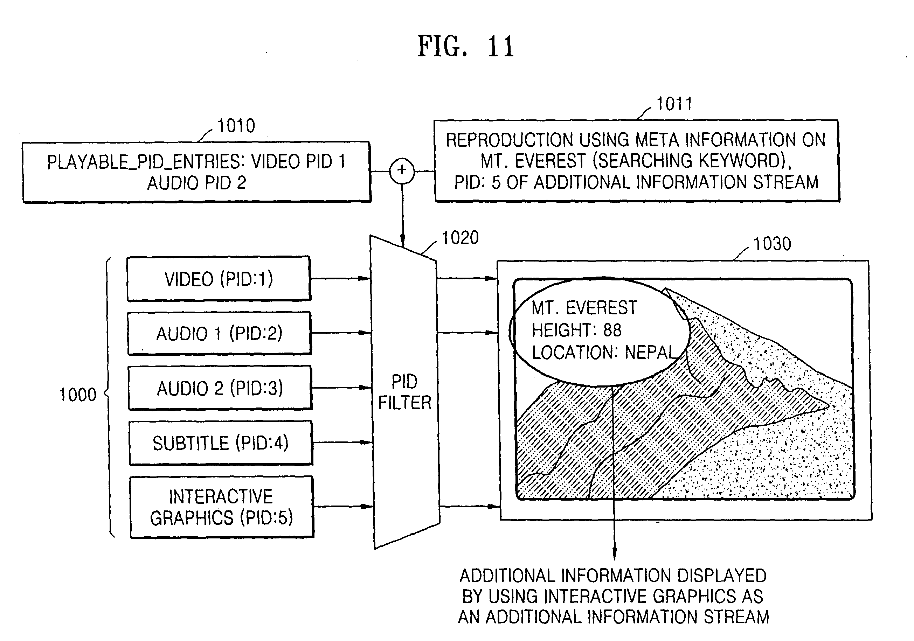

Figure 11 is a view showing an example of additional information displaying function using meta information including additional PID information according to the second embodiment of the present invention;

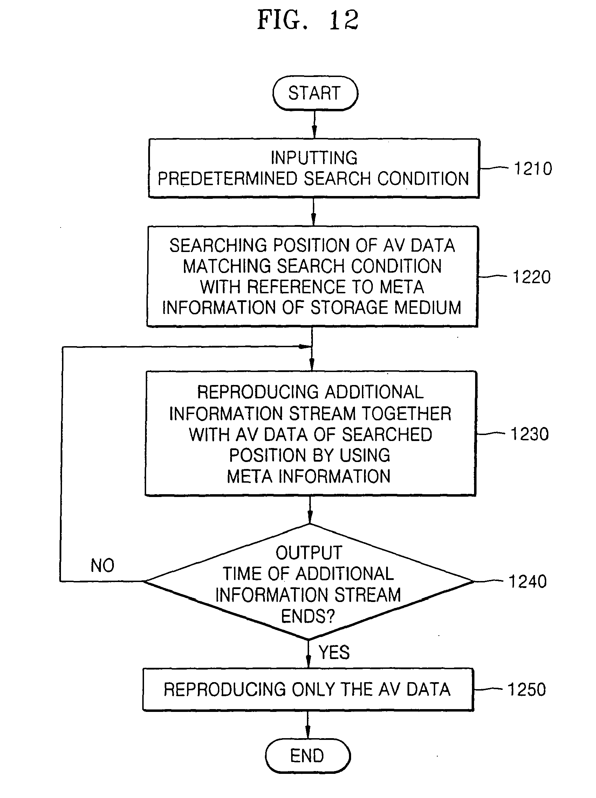

Figure 12 is a flowchart showing a reproducing method providing enhanced searching and additional information displaying functions according to the second embodiment of the present invention;

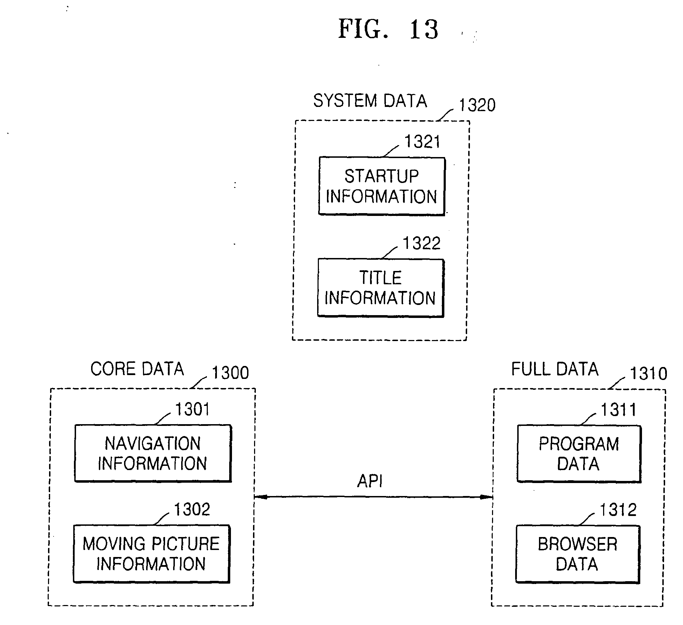

Figures 13 through 19 are views showing functions of reproducing AV data in a searched section and generating events according to a third embodiment of the present invention;
Figure 13 is a view showing some kinds of data recorded in a storage medium according to the third embodiment of the present invention;

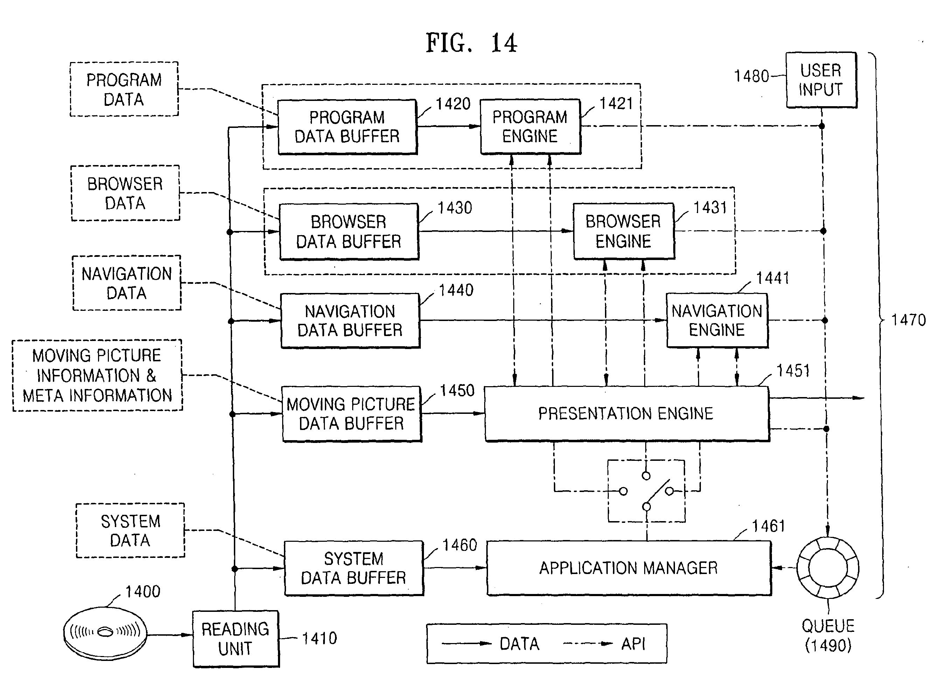

Figure 14 is a schematic view showing a reproducing apparatus according to the third embodiment of the present invention;

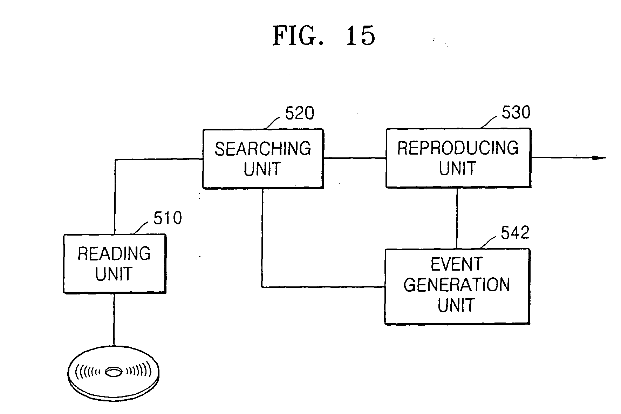

Figure 15 is a block diagram showing a reproducing apparatus according to the third embodiment of the present invention;

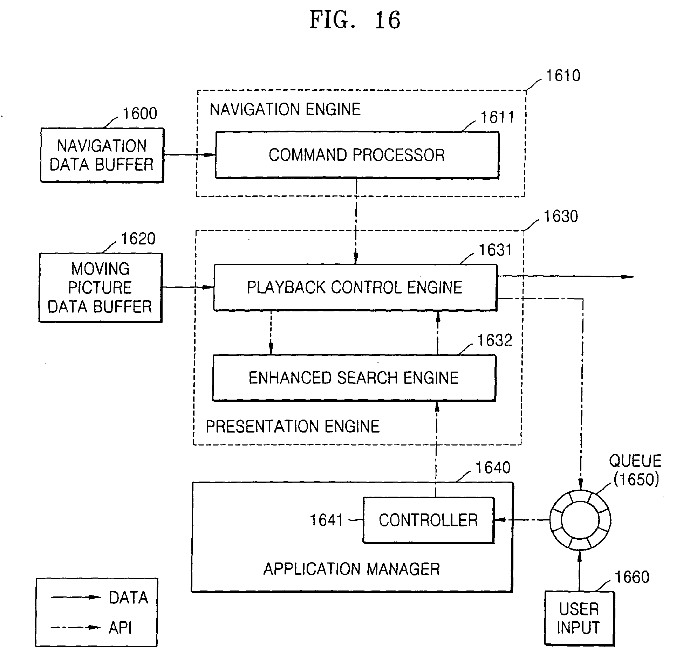

Figure 16 is a detail block diagram showing the reproducing according to the third embodiment of the present invention;

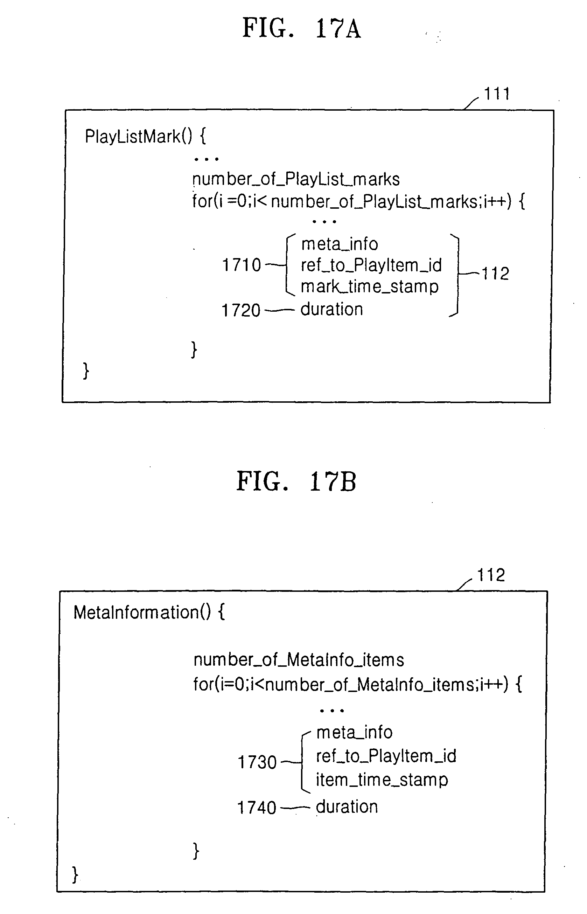

Figures 17A through 17C are views showing an example of meta information used for enhanced searching and event generating processes according to the third embodiment of the present invention;

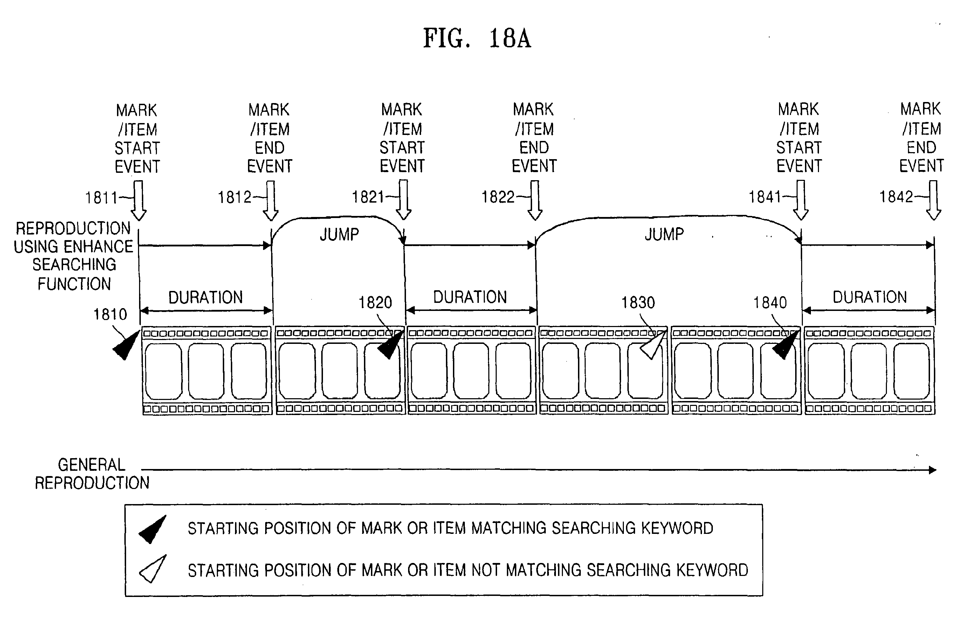

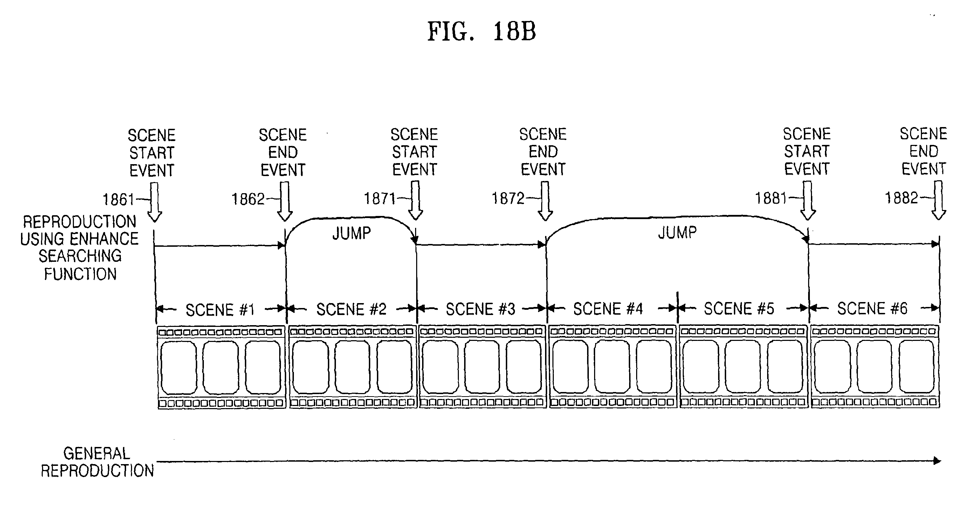

Figures 18A through 18B are views showing an example of enhanced searching and event generating functions according to the third embodiment of the present invention; and

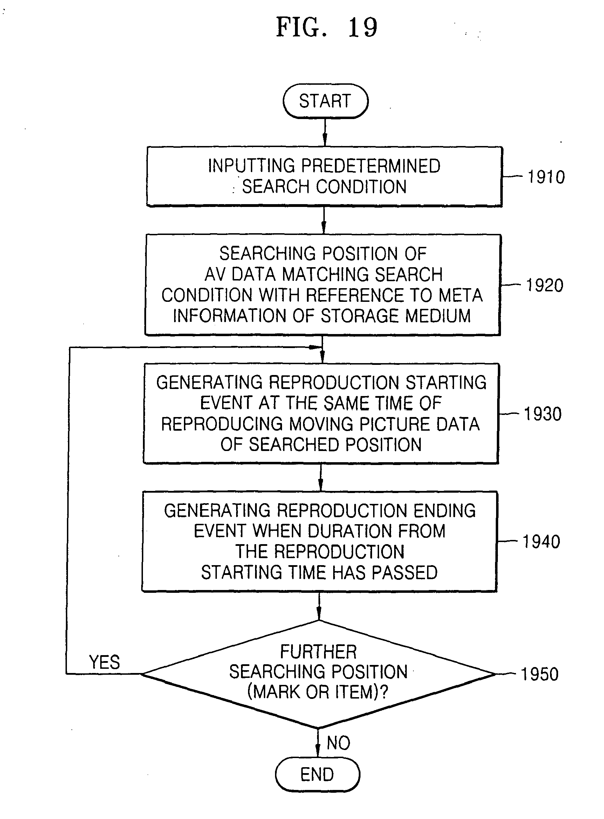

Figure 19 is a flowchart showing a reproducing method providing enhanced searching and event generating functions according to the third embodiment of the present invention.

The preferred embodiments of the present invention will be described in detail with reference to the accompanying drawings.

A storage medium according to the preferred embodiments of the present invention stores moving picture data used to reproduce a movie and meta information used to search a predetermined section of the moving picture data and provide an additional function using the moving picture data in the searched section at a time of reproducing the moving picture data in the searched section.

Preferably, the meta information includes search information corresponding to at least one search condition of a scene, character, sound, location, and item.

In particular, the additional function using the search information includes:
1) a function of shifting to the searched section and reproducing the moving picture data in the searched section (a first embodiment);
2) a function of reproducing associated additional information at the time of reproducing the moving picture data in the searched section (a second embodiment); and
3) a function of generating a predetermined event at the time of reproducing the moving picture data in the searched section (a third embodiment).

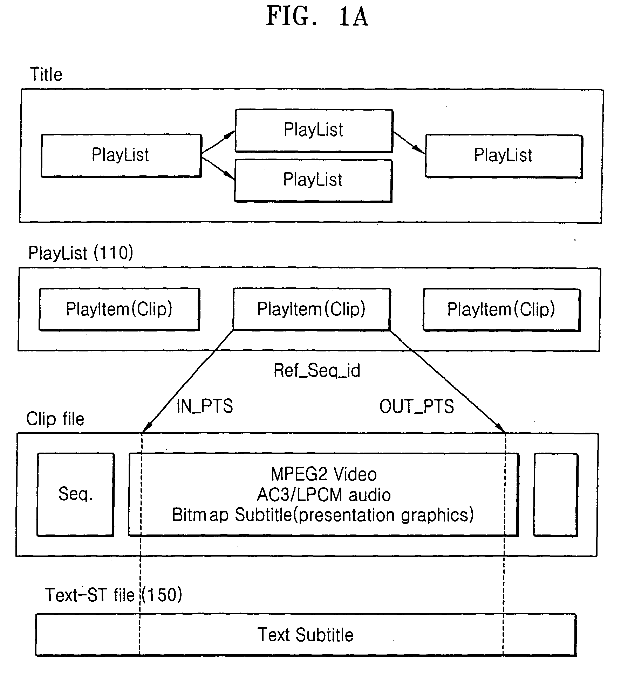

Figures 1A through 1C are views showing correlation of a play list, play list marks, meta information, play items, clip Information, and a clip. The meta information used to search AV data matching a user's defined search conditions and provide the additional functions using the moving picture data in the searched section and a position of the meta information will be described.

The storage medium according to the present invention stores the AV data and the meta information. The storage medium provides an enhanced searching function using the meta information. The recording unit for the AV data is a clip, and the reproduction unit for the AV data is a play list or a play item. A play list mark indicates a specific position of a clip corresponding to the play list. The clip in the present invention corresponds to a cell, that is, a recording unit for a conventional DVD. The play list and the play item in the present invention correspond to a program and a cell, that is, a reproduction unit for the conventional DVD. Namely, the AV data is recorded in units of clip on the storage medium. In general, the clips are recorded in consecutive regions of the storage medium. The AV data is compressed and recorded in order to reduce size thereof. Therefore, in order to reproduce the recorded AV data, property information of the compressed AV data is needed. In a clip A/V stream, packets formed by multiplexing video, audio and other data streams are compressed, encoded, and recorded. Each of the packets is identified with a packet identifier (PID), that is, a unique identifier.

The property information of the AV data is recorded in a clip information region for each of the clips. In the clip information region, audio-visual property information of each clip and entry point maps are recorded, wherein the entry point maps include matching information with presentation time stamps (PTS) representing reproduction time information of the clips. In the MPEG standard, which is the most widely used moving picture compression standard, an entry point corresponds to a position of an I-picture which is subject to an intra-picture compression process, and the entry point map is mainly used for a time search process for searching a position corresponding to a certain time passing after the reproduction starts.

The play list is the reproduction unit. At least one play list is stored on a storage medium. One movie may be constructed with one play list. In addition, one movie may be constructed with several play lists. The play item includes file names of clip information files to be reproduced and reproduction starting and ending times IN_time and OUT_time of the clip information files to indicate clips and predetermined positions on the clips used to reproduce the moving picture data.

Meanwhile, the meta information used to provide enhanced searching function and additional functions according to the present invention may be recorded in play list marks included in the play list. Otherwise, the meta information may be recorded in a separated space apart from the play list marks within the play list. Moreover, the meta information may be recorded in a separated space apart from the play list in a binary or text form.

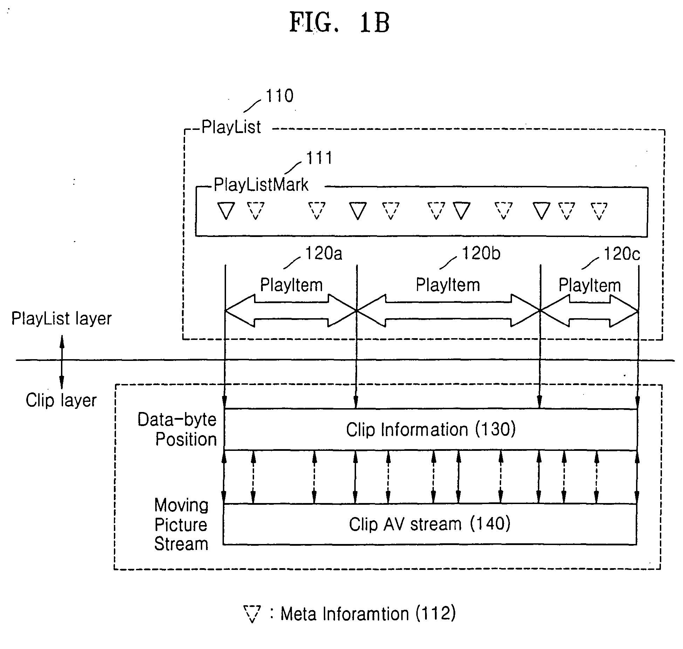

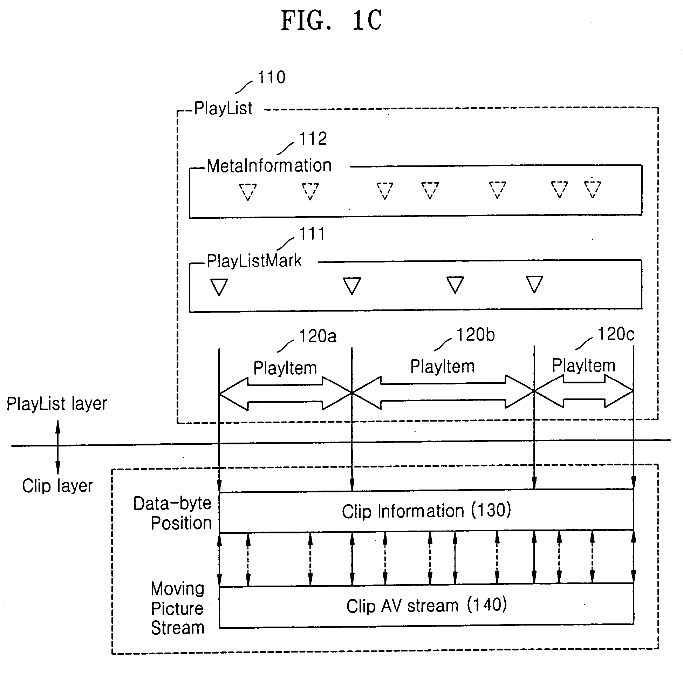

Referring to Figure 1A, the meta information may be included in a text-based data such as a text subtitle apart from the moving picture data. Referring to Figure 1B, the meta information may be included in play list marks. Referring to Figure 1C, the meta information may be included in a separated space apart from the play list marks in the play list in a binary form.

One play list 110 consists of a plurality of play list marks 111 indicating specific positions of the moving picture stream, a plurality of pieces of meta information 112, and a plurality of play items 120. The meta information 112 may be recorded in the play list marks 111 or in a separated space apart form the play list marks 111 to be used for an enhanced searching function. The play items 120 indicate sections in a clip. More specifically, the play items 120 indicates reproduction starting times IN_time and reproduction ending times OUT_time of the sections in the clip. Actually, the sections of the clip are searched by using clip information 130. In general, the AV data reproduction is performed in units of play list, and in one play list 110, the AV data reproduction is performed in the order of the play items 120 listed in the play list 110.

Therefore, the reproduction position can be changed by shifting to specific positions of the AV data by using the play list marks 111. In addition, as described above, since meta information includes various kinds of information, the reproduction position can be shifted to a specific scene matching the user's selected search condition during reproduction of the AV data.

Now, a first embodiment of the present invention for implementing an additional function of shifting to a searched section of moving picture data and reproducing the moving picture data in the searched section will be described.

Figure 2A is a view for explaining operations of positioning and reproducing AV data matching a user's search condition in a case where meta information is included in a play list.

In a case where the meta information is included in the play list mark, each of the search items is referred to as a mark. The play list mark includes chapter marks identifying chapters, skip points identifying still picture changeover points in an application such as a browsable slide show, link points used for navigation commands such as LinkMK, and other marks identifying meta information marks. In particular, an example using Chapter_mark and Scene_marks is shown in Figure 2A.

At a time of reproducing a storage medium where a play list mark is defined, if a search condition: Mark_type = Scene_mark, Desc = "dental clinic" is input by using an enhanced search menu, which is provided by a manufacturer of the reproducing apparatus or the storage medium, a search engine in the reproducing apparatus compares the meta information with mark types of marks in the play list mark to search marks (Mark1, Mark4, and Mark5) matching the input search condition. Next, the searching result is provided to the user, and the user selects one of the searched marks. In a case where the user selects reproduction of the mark Mark1, a clip corresponding to PTS: i is reproduced at the play item PlayItem0 in accordance with the mark_time_stamp value and the reference play item value of the mark Mark1. At this time, the reproducing apparatus records the mark number "1" having reproduction starting position information in an arbitrary register and updates the recorded register value every time that a mark matching the input search condition appears during the reproduction.

Figure 2B is a view for explaining operations of positioning and reproducing clips matching a user's search condition in a case where meta information is recorded in a separated space apart from the play list mark.

In a case where the meta information is recorded in a separated space apart from the play list mark, each of the search items is referred to as an item. In addition, in a case where the meta information is additionally recorded in a text subtitle file, the items of the meta information can be defined in the same form as elements of a markup document. The attributes of the elements have PTS values.

The meta information may include Scene_type identifying scenes of a movie, Character_type identifying characters, and various item types. An example of the meta information including only the Scene_type as item types of items is shown in Figure 2B. If the user inputs a search condition: Item_type = Scene_type, Desc = "dental clinic", the reproducing apparatus compares the meta information with item types of items in the meta information and provides items (Item0, Item2, and Item4) matching the input search condition to the user. In a case where the user selects reproduction of the item Item0, a clip corresponding to PTS: i is reproduced at the play item Playitem0 in accordance with the item_time_stamp value and the reference play item value of the item Item0. At this time, the reproducing apparatus records the item number "0" having reproduction starting position in a register and updates the item number in the register every time that an item having the item type of Scene_type appears during the reproduction.

Now, user operations in a reproducing apparatus for reproducing AV data at the PTS time of the meta information matching with the user's input search condition will be described in detail. The user operation corresponds to a conventional DVD function such as NextPG_Search( ) and PrevPG_Search( ) used for a chapter changeover. In order to provide the user operations, Skip_to_next_Enhanced_Search_Point( ) and Skip_back_to_previous_Enhanced_Search_Point( ) used for a changeover of searched meta information are defined. At this time, similar to the conventional user operations of NextPG_Search( ) and PrevPG_Search( ) which are used in a single title, the user operations of skip_to_next_Enhanced_search_Point ( ) and Skip_back_to_previous_Enhanced_Search_Point( ) are validly used within a currently reproducing play list. Moreover, if information on connection among a plurality of play lists is defined, the user operations can be validly used within the plurality of the play list.

In accordance with the user operation Skip_to_next_Enhanced_Search_Point( ), the reproducing apparatus shifts to a PTS position of the meta information having the lowest PTS value among the PTS values of the searched meta information more than the PTS vlaue of the register-stored meta information and starts reproduction. In accordance with the user operation Skip_back_to_previous_Enhanced_Search_Point( ), the reproducing apparatus shifts to a PTS position of the meta information having the highest PTS value among the PTS values of the searched meta information less than the PTS vlaue of the register-stored meta information and starts reproduction. Now, the user operations will be described in detail with reference to Figures 3A and 3B.

Figure 3A is a view for explaining operations of Skip_to_next_Enhanced _Search_Point( ) in a case where meta information is included in play list marks.

The example of Figure 3A shows a case where a specific input event allocated with the user operation Skip_to_next_Enhanced_Search_Point( ) is generated during reproduction of the AV data including the meta information matching the user's input search condition.

It is assumed that the user's input search condition is Mark_type = Scene_mark, Desc = "dental clinic" and the marks matching the user's input search condition are Mark1, Mark4, and Mark5. If the user selects the mark Mark1, the reproduction starts at the PTS position of the associated mark. Next, if the user operation Skip_to_next_Enhanced_Search_Point( ) is received, among the searched marks having the PTS values more than the PTS value of the register value Mark1 indicating the currently reproducing mark number in the play list mark recorded in the currently reproducing play list, the mark Mark2 having a value of Desc not matching the input search condition and the mark Mark3 having a mark type not matching the input search condition are neglected. On the other hand, among the marks Mark4 and Mark5 matching the input search condition, the mark Mark4 having the lowest PTS value is selected. As a result, the reproduction point is shifted to the PTS: *l* of the play item PlayItem1 indicated by the mark Makk4.

In addition, when the reproducing apparatus selects the next mark matching the input search condition, if there is no mark having a PTS value more than the mark corresponding to the register value indicating the currently reproducing mark number and matching the input search condition, it is preferable that the user operation be neglected.

Figure 3B is a view for explaining operations of Skip_to_next_Enhanced _Search_Point( ) in a case where meta information is recorded in a separated space apart from the play list marks.

In this case, it is assumed that the user's input search condition is "Item_type = Scene_Item, Desc = "dental clinic" and the items matching the input search condition are Item0, Item2, and Item4. If the user selects the item Item0, the reproduction starts at the PTS position of the associated item. Next, similar to the case of Figure 3A, if the user operation Skip_to_next_Enhanced_Search_Point( ) is received, among the searched items having the PTS values more than the PTS value of the currently-registered item, the item Item1 having a value of Desc not matching the input search condition is neglected. On the other hand, among the items Item2 and Item4 matching the input search condition, the item Item2 having the lowest PTS value is selected. As a result, the reproduction position is shifted to the PTS: k of the play item Playitem1 indicated by the item Item2.

In addition, when the reproducing apparatus selects the next item matching the input search condition, if there is no item having a PTS value more than the item corresponding to the register value indicating the currently reproducing item number and matching the input search condition, it is preferable that the user operation be neglected.

Figure 4A is a view for explaining operations of Skip_back_to_previous_Enhanced_Search_Point( ) in a case where meta information is included in play list marks.

The example shows a case where a specific input event allocated with the user operation Skip_back_to_previous_Enhanced_Search_Point( ) is generated during reproduction of the AV data including the meta information matching with the user's input search condition.

Figure 4B is a view for explaining operations of Skip_back_to_previous_Enhanced_Search_Point( ) in a case where meta information is recorded in a separated space apart from the play list marks.

The user operation Skip_back_to_previous_Enhanced_Search_Point( ) is similar to the user operation Skip_to_next_Enhanced_Search_Point( ). In the user operation Skip_back_to_previous_Enhanced_Search_Point( ), among the searched marks or items having the PTS values less than the PTS value of the currently-registered mark or item, the mark or item having the highest PTS value is selected. The reproduction position is shifted to the PST position indicated by the selected mark or item. In addition, when the reproducing apparatus selects the previous mark or item matching the input search condition, if there is no mark or item having a PTS value less than the mark or item corresponding to the register value indicating the currently reproducing mark or item number and matching the input search condition, it is preferable that the user operation be neglected.

Figure 5 is a block diagram showing a reproducing apparatus for reproducing a storage medium on which search information of the present invention is recorded.

The reproducing apparatus includes a reading unit 510, a searching unit 520, a reproducing unit 530, and a time information storing unit 540.

The reading unit 510 reads the meta information recorded on the storage medium such as the aforementioned marks or items. The searching unit 520 searches the read meta information to output search items matching desired search conditions. The reproducing unit 530 reproduces AV data corresponding to the search items selected by the user among the output search items. The time information storing unit 540 stores the presentation time information included in the selected search items.

In response to a command of shifting to a next or previous search item during reproduction of the AV data, the reproducing unit 530 compares the presentation time information included in the meta information of the search item with the stored presentation time information and jumps to AV data in accordance with the comparison result to reproduce the AV data. That is, in response to the command of shifting to the next searched section during reproduction of the AV data, the reproducing unit 530 changes the reproduction position of the AV data and reproduces the AV data in accordance with presentation time information stored in the search item and the presentation time information has a value closest to but more than that of the stored presentation time information. On the other hand, in response to the command of shifting to the previous search item during reproduction of the AV data, the reproducing unit 530 changes the reproduction position of the AV data and reproduces the AV data in accordance with presentation time information stored in the search item and the presentation time information has a value closest to but less than that of the stored presentation time information.

Now, a second embodiment of the present invention for implementing an additional function of reproducing associated additional information at a time of reproducing moving picture data in a searched section will be described.

Figures 6A through 6C are views showing examples of meta information used for enhanced searching and additional information displaying functions according to the second embodiment of the present invention;

The meta information includes search information 610, additional PID information 620, and the like.

The search information 610 is used to search a predetermined section of the moving picture data matching a predetermined search condition input by a user or externally received. By using search keywords included in the search information, an enhanced searching function can be implemented.

In addition, the additional PID information 620 is a packet identifier for identifying the associated additional information reproduced together with the moving picture data in the searched section. The additional PID information 620 may further include output time information 630 representing a reproduction time of the associated additional information. By using the additional PID information 620, the associated additional information can be reproduced together with the moving picture data in the searched section matching the search condition for a certain time. That is, at a time of reproducing the moving picture data searched with the enhanced searching function, the additional PID information 620, which is the packet identifier of the additional information associated with the search keyword, is applied to a PID filter to reproduce an additional information stream, which is not output during general moving picture data reproduction.

As described above, the meta information 112 may be recorded in the play list mark of the play list or in a separated space (Meta Information) apart from the play list mark. Otherwise, the meta information 112 may be recorded in a separated space apart from the play list.

Referring to Figure 6A, an example of a data structure of the meta information 112 recorded in the play list mark of the play list is shown.

The meta information 112 used for the enhanced searching and additional information displaying functions is included in the play list mark 111. The play list mark structure PlayListMark includes search information 610 such as a meta_info field representing search keyword information, a ref_to_PlayItem_id field indicating a play item where a specific search keyword exists, and a mark_time_stamp field indicating a position of the associated search keyword in the indicated play item. In addition, the play list mark structure PlayListMark includes additional PID information 620 such as an entry_ES_PID field indicating a packet where the additional information for the associated search keyword is recorded and output time information 630 such as a duration field representing a time interval when an output of the associated additional information packet is maintained.

Referring to Figure 6B, an example of a data structure of the meta information 112 recorded in the play list but in a separated structure apart from the play list mark of the play list is shown.

The meta information structure MetaInformation where the meta information 112 is recorded includes search information 640 such as a meta_info field representing search keyword information, a ref_to_PlayItem_id field indicating a play item where a specific search keyword exists, and a mark_time_stamp field indicating a position of the associated search keyword in the indicated play item. In addition, the meta information structure MetaInformation includes additional PID information such as an Additional_PID field 650 indicating a packet where the additional information for the associated search keyword is recorded and output time information 660 such as a duration field representing a time interval when an output of the associated additional information packet is maintained.

Referring to Figure 6C, an example of a data structure of the meta information recorded in a separated space apart from the play list, and particularly, expressed in a text-based markup language is shown.

A scene in a moving picture is a unit of searching or reproduction. A movie is divided into a plurality of the scenes. Each of the scenes includes search information 670 on a character, sound, and item associated with the scene, additional PID information such as a PID field 680 indicating a packet where a stream of the additional information associated with the search information is recorded, and output time information 690 such as a duration field representing a time interval when an output of the associated additional information packet is maintained.

In the examples shown in Figures 6A through 6C, the meta information according to the present invention may include information which a manufacturer can indicate an output position of additional information stream by providing a starting time of the output of the additional information stream for the search information. In addition, the meta information may include an ending time field representing the ending time instead of the duration field representing the time interval when the output of the associated additional information packet is maintained.

Since the aforementioned meta information used to implement the enhanced searching and additional information displaying functions are described as exemplary embodiments, various forms thereof can be implemented.

Figure 7 is a view showing an example of moving picture data of a storage medium including additional PID information used for an additional information displaying function according to the second embodiment of the present invention.

The moving picture data (Clip AV stream) recorded on a storage medium according to the present invention includes a video packet 710, an audio packet 720, a presentation graphics packet 730, and an interactive graphics packet 740.

In addition, interactive graphics packets 750 and 750' may be recorded on the storage medium in a multiplexed form. Otherwise, the interactive graphics packets 750 and 750' may be recorded in a separated space apart from the moving picture data (Clip AV stream) in an out-of-multiplexed form. In addition, an additional information stream having an out-of-multiplexed form may be stored not on the storage medium but on a local storage device.

More specifically, in order to construct one video data stream, a plurality of the video packets 710 having identical PID fields are compressed and encoded in a MPEG2 transport stream scheme and multiplexed into the moving picture data (Clip AV stream).

In order to construct a plurality of audio data streams, a plurality of the audio packets 720 having identical PID fields are multiplexed into the moving picture data (Clip AV stream) like the video packets 710.

In order to construct a plurality of subtitle bitmap images or other image data streams, a plurality of the presentation graphics packets 730 having identical PID fields are multiplexed into the moving picture data (Clip AV stream).

In order to construct a plurality of button data or the like used for user interaction, a plurality of the interactive graphics packets 740 are multiplexed into the moving picture data (Clip AV stream).

On the other hand, in order to display the additional information associated with the search information of the meta information, there are a plurality of the interactive graphics packets 750 and 750' displaying the additional information according to the present invention, in which a plurality of the button data not having the navigation commands are included. The interactive graphics packets 750 and 750' displaying the additional information may be multiplexed into the moving picture data (Clip AV stream) or recorded in a separated space apart from the moving picture data (Clip AV stream) in an out-of-multiplexed form, as described above. In the former case, in order to identify the packets constituting the streams multiplexed into the moving picture data (Clip AV stream), the streams are identified with the respective PID fields. In the latter case, in order to identify the interactive graphics packet 750' displaying the addition information steams recorded in the separated space in an out-of-multiplexed form, the interactive graphics packets 750' are identified with the respective unique PID fields.

Figure 8 is a schematic view showing a reproducing apparatus according to the second embodiment of the present invention.

The reproducing apparatus includes demodulation-ECC decode Module 810, de-packetizers 820 and 821, a PID filters 830 and 831, decoders 840 to 870, and blenders 880 and 881.

Similarly to Figure 7, the basic moving picture data used for the reproducing apparatus may be recorded on the storage medium 800 and some data may be stored not on the storage medium but in a separated space such as a local storage device 801.

The demodulation-ECC decode Module 810 reads the moving picture data stream in a multiplexed form out of data recorded in the storage medium 800 and performs a demodulation-ECC decode process on the moving picture data stream. Next, if the read moving picture data stream is a data stream indicated with a play item included in the play list, the moving picture data stream is transmitted as Main TS to the de-packetizer 820. In addition, if the read moving picture data stream is a data stream indicated with a sub play item, the moving picture data stream is transmitted as Sub TS to the de-packetizer 821.

On the other hand, the demodulation-ECC decode Module 810 also reads the additional information streams 802 in the out-of-multiplexed form stored in the local storage device 801, performs the demodulation-ECC decode process on the additional information streams, and transmit the decoded additional information streams to the respective de-packetizers 820 and 821.

Each of the de-packetizers 820 and 821 receives the compressed encoded data from the storage medium 800 or the separated space such as the local storage device 801, performs a de-multiplexing process on the received data, and divides the de-multiplexed data into a plurality of packets having identical PID fields: video stream packets; audio stream packets; presentation graphics packets; and/or interactive graphics streams. Next, the de-packetizers 820 and 821 de-packetizes the packets into elementary streams and transmits the elementary streams to the PID filters 830 and 831.

In response to playable_PID_entries information indicating the currently-used PID fields from the play item having the reproduction information about the current moving picture data, the PID filters 830 and 831 selects only the elementary streams having the PID fields indicated by the playable_PID_entries information out of a plurality of the elementary streams transmitted from the de-packetizers 820 and 821 and transmits the selected elementary streams into the respective decoders 840 to 870.

The decoders include a video decoder 840, a presentation graphics decoder 850, an interactive graphics decoder 860, and an audio decoder 870.

The video decoder 840 decodes elementary streams of the video data. The presentation graphics decoder 850 decodes subtitle streams or other elementary streams of the image data. The interactive graphics decoder 860 decodes elementary streams of the button data representing the button and additional information. The audio decoder 870 decodes elementary streams of the audio data. In addition, the audio decoder 870 may receives Main TS data and Sub TS data from the PID filters 830 and 831, respectively, under the control of a switch 833. Each of the blenders 880 and 881 performs a blending process on the decoded data transmitted from the decoders 840 to 870 to display the data as one picture on a screen.

In summary, the reproducing apparatus according to the present invention reads the multiplexed moving picture data, filters out the PID fields of the data stream packets to be reproduced by using the playable_PID_entries indicating the currently used PID fields included in the play items, performs a blending process on only the data streams corresponding to the filtered PID fields, and outputs the blended data streams.

The blocks constituting the aforementioned reproducing apparatus may include a presentation engine for decoding and reproducing the moving picture data. In addition, the presentation engine may be constructed as a separated block. In addition, some or all of the blocks may be implemented in a software manner. In addition, all the functions may be incorporated into a single chip, that is, a system-on-chip (SoC).

Figure 9 is a block diagram showing a reproducing apparatus used for enhanced searching and additional information displaying functions according to the second embodiment of the present invention.

The reproducing apparatus includes a reading unit 510, a searching unit 520, a reproducing unit 530, and an addition information filtering unit 541. The searching unit 520 searches sections of the moving data matching input search conditions by using the search information. The additional information filtering unit 541 filters out additional information stream associated with the moving picture data in the searched section by using the PID information. The reproducing unit 530 reproduces the filtered additional information stream together with the moving picture data in the searched section. In addition, the reproducing unit 530 reproduces the associated additional information for the time corresponding to the output time information.

Figure 10 is a view showing an example of a PID filter and a moving picture data stream output therefrom.

As the elementary streams 1000 divided from the Main TS data of Figure 8 by the de-packetizer 820, a video stream VIDEO (PID: 1), an audio stream AUDIO1 (PID: 2), an audio stream AUDIO 2 (PID: 3), a subtitle stream SUBTITLE (PID: 4) and an interactive graphics stream INTERACTIVE GRAPHICS (PID: 5) are shown.

If the reproduction of PID: 1 and PID: 2 are allowed by the recoded playable_PID_entries information 510 indicating the currently to-be-used PID fields included in the play items having information needed for reproduction of the current moving picture data, the PID filter 520 transmits the video stream VIDEO and the audio stream AUDIO 1 corresponding to the PID: 1 and PID: 2, respectively, to the respective decoders (840 and 870 in Figure 8) and outputs the video stream VIDEO and the audio stream AUDIO 1 on the display screen 1030.

As shown in Figure10, audio data is reproduced together with the video screen.

Figure 11 is a view showing an example of additional information displaying function using meta information including additional PID information according to the second embodiment of the present invention.

In case of general reproduction, as described with reference to Figure 10, only the video stream VIDEO and the audio stream AUDIO 1 having the PID: 1 and PID: 2 of which reproduction is allowed by the playable_PID_entries information of the current reproducing play items are transmitted to the respective decoders and reproduced.

However, in case of reproduction using the enhanced searching function for reproducing the moving picture data matching with a predetermined search keyword, among the elementary streams of PID: 1 to PID: 5, the PID: 1 and the PID: 2 indicated by the playable_PID_entries information 1010 of the play item and the PID: 5 of the addition information stream for the search information "Mt. Everest" recorded in the additional PID information of the meta information 1011 are transmitted to the respective decoders (840, 860 and 870 in Figure 8) and displayed on the display screen 1030.

Mores specifically, the PID: 5 indicated by the entry_ES_PID field (620 in Figure 6A) or the Additional_PID fields (650 in Figure 6B and 680 in Figure 6C) included in the meta information 1011 according to the present invention is also transmitted to the PID filter 1020. Therefore, the PID filter 1020 can transmit the elementary stream corresponding to the PID: 5 together with the PID: 1 and PID: 2 to the respective decoder to be reproduced. As a result, as shown in Figure11, in addition to the video and audio for Mt. Everest, the additional information on the search information "Mt. Everest" is output on the display screen 1030. That is, the additional information such as the height and location of Mt. Everest can be displayed.

On the other hand, as described above, the duration field (630 in Figure 6A, 660 in Figure 6B, or 690 in Figure 6C) corresponds to the time interval when the additional information is maintained from the output starting time to the output ending time for the additional information stream of the search information "Mt. Everest". If the time indicated by the duration field has passed, the PID: 5 indicating the additional information stream for the search keyword among the to-be-used PID information is removed by the PID filter 1020. After that, a general moving picture data without the additional information is output and reproduced.

Figure 12 is a flowchart showing a reproducing method providing enhanced searching and additional information displaying functions according to the second embodiment of the present invention.

In order to provide the enhanced searching and additional information displaying functions according to the present invention, a predetermined search condition as an enhanced search keyword is externally received from a user input (operation 1210). A position of the moving picture data matching the input search condition is retrieved with reference to the meta information stored in the storage medium (operation 1220). That is called an enhanced searching function.

On the other hand, the additional information associated with the search keyword information is reproduced together with the moving picture data in the searched position by using the additional PID information of the meta information (operation 1230). When the output time of the additional information indicated with the output time information of the meta information has passed (operation 1240), only the moving picture data without the additional information is reproduced (operation 1250). That is called an additional information displaying function.

As a result, the section of the moving picture data matching the search keyword information included in the meta information can be searched and only the moving picture data in the searched sections can be reproduced. In addition, the additional information associated with the matching moving picture data can be reproduced together with the moving picture data. When a certain time has passed, only the general moving data is reproduced. For example, in case of the search keyword "Mt. Everest", the video and audio about Mt. Everest among the moving picture data are reproduced, and simultaneously, the additional information such as the height and location of the search keyword information "Mt. Everest" may be reproduced. When a certain time has passed, only the general moving data without the additional information is reproduced.

Now, a third embodiment of the present invention of implementing an additional function of generating a predetermined event at a time of reproducing moving picture data in a searched section will be described.

The storage medium according to the third embodiment of the present invention includes meta information used to perform enhanced searching and generate the event in addition to the moving picture data used to reproduce a movie and navigation information used to control the reproduction. The meta information include search information for searching a section of the moving picture data matching a search condition and event information used to generate reproduction starting and ending events at the reproduction starting and ending times for the moving picture data in the searched section. Accordingly, a program engine or a browser engine for controlling a presentation engine can perform a specific operation on the associated event.

Figure 13 is a view showing some kinds of data recorded on a storage medium according to the third embodiment of the present invention.

On the storage medium, core data 1300, full data 1310, and system data 1320 are recorded.

The core data 1300 used to reproduce the moving picture data includes compressed encoded moving picture information 1302 and navigation information 1301 used to control reproduction of the moving picture information 1302. The moving picture information 1302 includes, as a recording unit, a Clip A/V Stream file encoded in accordance with the MEPG standard or the like and a Clip Information file including encoding attributes of the Clip A/V Stream files, Entry Point information, and the like. In addition, the moving picture information 1302 also includes, as a reproduction unit, play items indicating reproduction starting and ending times IN_time and OUT_time positions of the clip information file and a play list including a plurality of the play items. Therefore, the moving picture information 1302 can be reproduced with reference to the navigation information 1301 of the storage medium, so that the user can watch the moving picture such as a high image quality movie.

On the other hand, the full data 1310 used to provide an additional function as well as to reproduce the moving picture may include program data 1311 for providing a user interactive function and/or browser data 1312 for fetching and reproducing information associated with a markup document storing the moving picture associated information. In case of not using the additional function, the full data 1310 may not be included.

The program data 1311 may provide a game function using the moving picture data, a function of displaying a director's comment together with some portion of the reproduced moving picture data, a function of displaying additional information together with some portion of the reproduced moving picture data, or a function of chatting during reproduction of the moving picture data. In addition, a program implemented with JAVA language or the like may be included.

The browser data 1312 is constructed with commands used to fetch and reproduce information associated with the moving picture stored in the markup document. The commands may be implemented with a markup language such as the hypertext markup language (HTML) and/or an executable script language such as ECMA script. Accordingly, the information associated with the moving picture stored in the markup document can be fetched and reproduced together with the moving picture. For example, news about actors or actresses stored in web pages or other files associated with the movie recorded in the storage medium, news about events associated with the movie, updated subtitles, or other associated information is fetched and reproduced together with the movie. In addition, the full data 1310 may include other types of data used to provide additional functions other than the moving picture reproducing function.

Meanwhile, the system data 1320 used to control reproduction of the core data 1300 and/or the full data 1310 includes startup information 1321 and/or title information 1322. The startup information 1321 indicates the first reproduction position of an object when the reproducing apparatus reproduces the storage medium. The title information 1322 includes entry point information indicating the reproduction positions of the object.

Meanwhile, the meta information according to the present invention includes search information and event generation information used for the enhanced searching and event generating functions, respectively.

For example, the meta information according to the present invention uses characters, dialogs, sounds, items, locations, or other information as a search keyword based on contents of a scenario for a movie. Therefore, by using the search keyword for characters, dialogs, sounds, items, or locations, it is possible to reproduce only the desired moving picture information among the moving picture information.

In addition, by using the meta information according to the present invention, the reproduction starts at the position of the AV data where the user's input search keyword matches. At the reproduction starting and ending positions of the section including the associated search keyword, the section reproduction starting and ending events may be generated. Therefore, a specific operation may be performed on events generated by engines for executing the program data 1311 or the browser data 1312.

Meanwhile, the meta information may be recorded to be included in the moving picture information 1302. Otherwise, the meta information may be recorded apart from the moving picture information 1302. That is, the meta information may be included in a play list mark within a play list included in the moving picture information 1302. Otherwise, the meta information may be included in a separated space apart from the play list mark within the play list. In addition, the meta information may be in a form of a binary or text file apart from the play list.

The moving picture information 1302 and the navigation information 1301, that is, a set of commands used to reproduce the moving picture are called core data 1300 or data for a core mode. Since the core mode is a mode for reproducing data necessary for seeing a movie with a DVD application, that is, a widely used video application, the core mode is called a movie mode. On the other hand, data used for a programming function for providing a user interaction and/or a browser function is called full data 1310 or data for a full mode. The startup information 1321 and the title information 1322 which are not in a specific mode are called system data 1320.

The moving picture data recorded on the storage medium where the aforementioned data is stored can be reproduced in two modes. One is the core mode in which the moving picture data is reproduced in a general movie mode by using the navigation data, that is, core data 1300. The other one is the full mode in which the reproduced moving picture data is displayed on a display window defined by an application implemented with a program language or a markup language included in the full data 1310.

When the full mode is selected by the user or in accordance with a navigation flow, in the application implemented with a program language or a markup language (in the present invention, an example of the program language is the JAVA langue, and hereinafter, the application is referred to as a JAVA application), the display window is generated by a JAVA-programmed function or a markup-language object element. The moving picture data can be displayed under the control of the JAVA application or an ECMAScript application.

On the other hand, several resources (for example, image, audio, etc.) which are referred by JAVA-programmed contents or JAVA applications or by markup documents are also displayed together with the moving picture data.

In a case where in the aforementioned full mode the moving picture data is displayed on the display window defined by the JAVA applications and/or the markup-language object elements, it is necessary to synchronize the moving picture data with the JAVA applications and/or the markup documents.

Figure 14 is a schematic view showing a reproducing apparatus according to the third embodiment of the present invention.

The reproducing apparatus includes a reading unit 1410, buffer units 1420 through 1460, reproducing units 1421 through 1461, and a user inputting unit 1470. The reproducing apparatus operates in three modes. The first mode is a core mode for reproducing a moving picture such a movie by using core data 1300. The second mode is a browsing mode for outputting a markup document by using browser data 1312 constructed with a markup language and associated resources. The third mode is a program mode for providing a program execution environment by using program data 1311 constructed with JAVA language or the like.

In order to support these three modes, the reproducing units 1420 through 1460 include a program engine 1421, a browser engine 1431, and a navigation engine 1441, respectively. An application manger selects one of the engines by using a switch to support the corresponding reproduction mode. Therefore, when core mode data or full mode data is processed, one of the engines 1421, 1431, and 1441 is activated.

If the reproducing apparatus is a basic reproducing apparatus for reproducing a basic moving picture such a movie, the reproducing apparatus may not include the program and browser engines 1421 and 1431 and the buffer units 1420 to 1460.

Now, the construction of the reproducing apparatus will be described in detail.

The reading unit 1410 reads moving picture data 1302, navigation information 1301, program data 1311, browser data 1312, and system data 1320 and temporarily store the data to the respective buffer units. The buffered navigation, program, browser data 1301, 1311, and 1312 are transmitted to the respective engines. The buffered system data 1320 is transmitted to the application manager 1461, which selects a first reproduction mode (the core or full mode) and the associated data. During the reproduction, in order to change modes or search title by the user, the associated mode can be performed with reference to title information 1322.

The buffer units 1420 through 1460 temporarily stores the data received form the read unit 1410. The buffer units 1420 through 1450 transmit the data to the respective engines. In accordance with the data temporarily stored, some of the program, browser, navigation, moving picture, and system data buffer 1420 through 1460 may be incorporated.

The reproducing units 1421 through 1461 include the program engine 1421, the browser engine 1431, the navigation engine 1441, the presentation engine 1451, and the application manager 1461, respectively.

The program engine 1421 has a function of executing program codes included in the program data 1311. The program executed by the program engine 1421 can control the presentation engine 1451 through the API.

The browser engine 1431 has a function of outputting the markup document and controlling the presentation engine 1451 through the API.

The navigation engine 1441 has a function of controlling the presentation engine 1451 by using the navigation data, which is a set of commands used to reproduce the moving picture.

The presentation engine 1451 has a function of decoding the moving picture data reproducing the moving picture.

The application manager 1461 includes a control unit for processing the APIs corresponding to commands input by the user and the APIs transmitted from the engines. The application manger 1461 has functions of processing the commands input by the user and the APIs generated by the engines and transmitting the APIs to the engines of the associated modes. In addition, the application manager 1461 has a management function of starting and stopping the program engine 1421, the browser engine 1431, and the navigation engine 1441.

The user inputting unit 1470 includes a user inputting module 1480 and a queue 1490. The queue 1490 has a function of receiving the APIs corresponding to commands input by the user and the APIs transmitted from the engines and transmitting the APIs to the application manager 1461. The APIs contain event information, command execution information, state information, and other information used to execute the program engine.

Figure 15 is a block diagram showing a reproducing apparatus according to the third embodiment of the present invention.

More specifically, Figure 15 schematically shows a construction of the reproducing apparatus for searching sections of moving picture data matching search conditions and generating events at reproduction starting and ending times for the moving data in the searched sections.

The reproducing apparatus includes a reading unit 510, a searching unit 520, a reproducing unit 530, and an event generating unit 542. The searching unit 520 and the event generation unit 542 generate predetermined events at a time of reproducing the moving picture data in the searched section.

Figure 16 is a detail block diagram showing the reproducing according to the third embodiment of the present invention.

Figure 16 is a detail block diagram of the reproducing apparatus of Figure 14. For convenience of description, only the core mode (movie mode) is described, and description about the program and browser modes is omitted.

An application manager 1640 selects a first reproduction mode with reference to system data and activates an associated engine for executing the mode. Since the program and browser modes are omitted in Figure 16, the first reproduction mode is the core mode, which is executed by the navigation engine 1610. The application manager 1640 includes a control unit 1641 for controlling event generation.

As shown in Figure 16, the navigation engine 1610 has functions of processing navigation data and controlling the presentation engine 1630 through the APIs to reproduce the moving picture such as a movie. The navigation engine 1610 includes a command processor 1611. The command processor 1611 analyzes the navigation data, that is, a movie object (a set of navigation commands) received from a navigation data buffer 1600 and transmits reproduction control commands for the moving picture data to the presentation engine 1630.

The presentation engine 1630 includes a playback control engine 1631 and an enhanced search engine 1632. In response to the reproduction control commands transmitted from the navigation engine 1610, the presentation engine 1630 reads the moving picture data from a moving picture data buffer 1620 and decodes the moving picture data by using the playback control engine 1631. At this time, the meta information according to the present invention is extracted from the moving picture data by analyzing the play list, that is, the aforementioned reproduction unit and transmitted to the enhanced search engine 1632 for providing the extended searching function. In a case where the meta information is stored in a separated file apart from the play list, it is preferable that the data be directly transmitted from the moving picture data buffer 1620 to the enhanced search engine 1632.

On the other hand, the playback control engine 1631 generates events according to the present invention every time of generating marks or items in which the meta information matching the predetermined search conditions is recorded. The generated events are transmitted to the application manager 1640 through the queue 1650. The application manager 1640 notices specific mode engines of currently controlling the presentation engine 1630 that the events are generated. The specific mode engines may include the program engine 1421 or the browser engine 1431 as shown in Figure 14.

As described above, when a user operation command (hereinafter, referred as a UOP command) for reproducing the moving picture data corresponding to the specific search keyword is input by the user during reproduction of the storage medium, the UOP command is transmitted from the control unit 1641 of the application manager 1640 through the queue 1650. The transmitted UOP command is transmitted to the enhanced search engine 1632 of the presentation engine 1630. The enhanced search engine 1632 searches the moving picture data corresponding to the scene associated with the input search keyword. In response to the searching result, the playback control engine 1631 starts reproducing the moving picture data at the searched position.

Figures 17A through 17C are views showing an example of meta information used for enhanced searching and event generating processes according to the third embodiment of the present invention.

Figure 17A shows an example where the meta information is included in the play list mark, that is, a set of marks indicating specific positions of the moving picture data corresponding to the play list, that is, a unit of reproduction of the moving picture data. In this example, the search information 1710 includes a meta_info field, a ref_to_PlayItem_id field, and a mark_time_stamp field. The mark_time_stamp field indicates reproduction starting position of the section of the moving picture data where each of the search keyword is recorded. The mark_time_stamp field may indicate a time when the event according to the present invention is generated. A duration field 1720 indicates information on the section interval from the reproduction starting position to the reproduction ending position associated with the search keyword. At time of the duration ending, the event according to the present invention may be generated.

Figure 17B shows an example where the meta information is included in a meta information structure MetaInformation, that is, a separated space apart from the play list mark within the play list. In this example, the search information 1730 includes a meta_info field, a ref_to_PlayItem_id field, and an item_time_stamp field. The item_time_stamp field indicates a reproduction starting position of the section of the moving picture data where each of the search information is recorded. The item_time_stamp field may indicate a time when the event according to the present invention is generated. A duration field 1740 indicates information on the section interval from the reproduction starting position to the reproduction ending position associated with the search keyword. At time of the duration ending, the event according to the present invention may be generated.

In case of using the meta information having the structures shown in Figures 17A and 17B, the presentation engine 1630 generates a section reproduction starting event at the reproduction starting position of the meta information through the reproduction control engine 1631. The generated event is transmitted to an application manager through a queue 1650. In addition, the presentation engine 1630 generates a section reproduction ending event at the reproduction ending position of the moving picture data corresponding to the search keyword of the moving picture data. The generated event is transmitted to an application manager through the queue 1650.

On the other hand, as described above, the meta information analyzed at the time of generating the events is transmitted to the enhanced search engine 1632 to be used to provide the enhanced searching function in accordance with various searching standards input by the user.

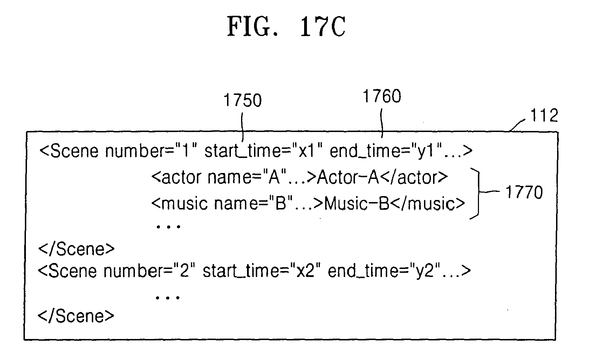

Figure 17C shows an example where the meta information is recorded in a separated space apart from the play list in a binary or text form. In particular, in this example, the meta information is implemented in the text form with a markup language.

A single movie is divided into a plurality of scenes and searching keyword information is recorded in each of the scenes. For example, it is assumed that a scene Scene1 has a time interval from a starting time x1 1750 to an ending time y1 1760 and search keyword information 1770 such as information on an actor A and information on a sound B. In addition, it is assumed that a scene Scene2 has a time interval from a starting time x2 to an ending time y2 and has at least one piece of search information existing in the scene.

In this case, the reproduction starting and ending event may be generated by using start_time and end_time attributes in the meta information, respectively.

When the enhanced searching function is activated by a user's input, a position corresponding to the input search keyword is searched by the enhanced search engine 1632 and the moving picture data of the position is reproduced by the reproducing control engine 1631. Therefore, if the user inputs or selects the desired search keyword such as a scene, character, item, location, and sound, the associated position of the moving picture data is searched by using the search keyword, so that reproduction can start from the user's desired position.

As described above, in addition to the enhanced searching function, the event generating function for generating the reproduction starting event and/or the ending event corresponding to the specific search keyword may be provided by using the meta information. In case of reproduction of the full mode, when the moving picture data corresponding marks or items associated with the particular searching to the specific search keyword is reproduced, the generated event may be used to provide additional functions such as the program function and the browsing picture data function.

Now, alternative examples of the generated event will be described.

Figures 18A and 18B are views showing an example of enhanced searching and event generating functions according to the third embodiment of the present invention.

The reproducing apparatus according to the present invention searches a mark, time, or scene matching the search keyword by using the enhanced search engine 1632 (see Figure 17A through 17C). When the user selects one of the to-be-reproduced searched mark, time, or scene, the reproducing apparatus shifts to the associated position as the reproduction starting position and starts reproduction. The enhanced search engine 1632 transmits the reproduction position information corresponding to the associated search keyword to the reproduction control engine 1631. The reproduction control engine 1631 reproduces the moving picture data of the associated position and simultaneously generates the section reproduction starting event by using the received reproduction position information.

When the reproduction has performed for the duration from the reproduction starting position associated with the search keyword selected by the user has passed, the reproduction control engine 1631 generates the reproduction ending event by using the duration field of the searched item or mark as shown in Figures 18A and 18B or the end_time in case of the meta information being stored in an external file as shown in Figure 18C.

By using the generated events, only the scenes associated with a specific search keyword may be continuously reproduced as shown Figures 18A and 18B. Figure 18A shows an example of reproducing the storage medium where the meta information is included in the mark or item. Figure 18B shows an example of reproducing the storage medium where the meta information is stored in the separated external file.

In addition, in alternative example, only a portion of the moving picture associated with the specific search keyword information may be reproduced and, at the time of the reproduction ending event generated, the reproducing apparatus may return to a search menu. Like this, various examples can be implemented by using the reproduction starting and ending events.

Figure 19 is a flowchart showing a reproducing method providing enhanced searching and event generating functions according to the third embodiment of the present invention.

When the user inputs a predetermined search condition or a searching request (operation1910), the reproducing apparatus searches a position of the moving picture data matching the input search condition with reference to the meta information recorded in the storage medium (operation 1920). At this time, this is called an enhanced searching function. In accordance with examples of the meta information, at least one of the marks, items, or scenes matching with the search condition. In addition, the reproduction apparatus reproduces the moving picture data of the searched position and simultaneously generates the section reproduction starting event (operation 1930). When duration from the reproduction stating position has passed or when the end_time is reached, the reproduction ending event is generated (operation 1940). The reproduction and event generation operations 1930 to 1940 may be repeated when the searched mark, item, or scene exists (operation 1950).

As a result, enhanced searching functions in accordance with various standards can be provided and an event may be generated during reproduction of the moving picture data matching the search condition. As described above, the generated event can be applied to a case where only the scenes associated with the specific search keyword. In addition, the generated event can be used for a synchronization signal for the program data or the browser data.

It is preferable that the storage medium according to the present invention be an optical disk which is detachable from the reproducing apparatus and readable by using an optical device of the reproducing apparatus. For example, the storage medium may include an optical disk such as CR-ROM, DVD or a to-be-develop optimal disk.

According to the present invention, the storage medium where the meta information is recorded can provide an enhanced searching function using various search keywords. In addition, an additional function using the search information may be provided. That is, it is possible to shift to the moving picture data in the searched section and reproduce the moving picture data. In addition, it is possible to reproduce the moving picture data and associated additional information and to generate an event.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A reproducing apparatus comprising:
a searching unit (520) to search a section of image data (140) matching a predetermined search condition with reference to meta information (112) from a storage medium, wherein the storage medium stores the image data (140) and the meta information (112) used to provide an additional function using the image data (140) in the searched section at a time of searching the predetermined section of the image data (140) and reproducing the image data (140) in the searched section; and
a reproducing unit (530) to reproduce the image data (140) in the searched section and providing the additional function using the image data (140) in the searched section by using the meta information (112).

2. The reproducing apparatus according to claim 1, wherein the searching and reproducing units (520,530) are included in a presentation engine decoding and reproducing the image data (140).

3. The reproducing apparatus according to claim 1 or 2,
wherein the searching unit (520) searching the section of the image data (140) matching the search condition with reference to meta information (112), and
wherein the meta information (112) includes search information (640) corresponding to at least one search condition of a scene, character, sound, location, and item.

4. The reproducing apparatus according to claim 1, 2 or 3, wherein the reproducing unit (530) positions the searched section and reproduces the image data (140) in the searched section with reference to the meta information (112).

5. The reproducing apparatus according to any of the preceding claims, wherein the reproducing unit (530) reproduces additional information (620) associated with the image data (140) in the searched section at a time of reproducing the image data (140) in the searched section with reference to the meta information (112).

6. The reproducing apparatus according to any of the preceding claims, wherein the reproducing unit (530) generates a predetermined event at a time of reproducing the image data (140) in the searched section with reference to the meta information (112).

7. The reproducing apparatus according to claim 4,
wherein the meta information (112) includes presentation time information (630) of the image data (140) in the searched sections,
wherein the reproducing unit (530) reproduces the image data (140) corresponding to a user's selecting search section out of the searched sections,
wherein the reproducing unit (530) stores the presentation time information (630) of the selected search section in a separated space;
wherein, in response to a command of shifting to a next or previous search section during the image data (140) reproduction, the reproducing unit (530) compares the presentation time information (630) included in the meta information (112) of the search section with the stored presentation time information (630) and jumps to image data (140) in accordance with the comparison result to reproduce the image data (140).

8. The reproducing apparatus according to claim 7,
wherein, in response to the command of shifting to the next searched section during the image data (140) reproduction, the reproducing unit (530) changes the reproduction position of the image data (140) and reproduces the image data (140) in accordance with presentation time information (630) included in the meta information (112) of the searched section, and
wherein the presentation time information (630) has a value closest to but more than that of the stored presentation time information (630).

9. The reproducing apparatus according to claim 7,
wherein, in response to the command of shifting to the previous search section during the image data (140) reproduction, the reproducing unit (530) changes the reproduction position of the image data (140) and reproduces the image data (140) in accordance with presentation time information (630) included in the meta information (112) of the searched section, and
wherein the presentation time information (630) has a value closest to but less than that of the stored presentation time information (630).

10. The reproducing apparatus according to claim 5,
wherein the meta information (112) includes packet identification information (620) indicating the associated additional information (620) which is reproduced together with the image data (140) in the searched section, and
wherein the reproducing unit (530) filters out the associated additional information (620) from the image data (140) and reproduces the associated additional information (620) together with the image data (140) in the searched section.

11. The reproducing apparatus according to claim 10,
wherein the meta information (112) further includes presentation time information (630) of the associated additional information (620); and
wherein the reproducing unit (530) reproduces the associated additional information (620) based on the presentation time information (630).

12. The reproducing apparatus according to claim 6,
wherein the meta information (112) includes an event used to start reproducing the image data (140) in the searched section and/or an event used to end reproducing the image data (140) in the searched section, and
wherein the reproducing apparatus further comprises an application manager receiving event generation information from the reproducing unit (530), transmitting the event generation information to an associated engine, and transmitting a user's input to the associated engine.

13. The reproducing apparatus according to claim 12,
wherein the associated engine comprise a program engine providing a user interactive function and/or a browser engine providing a browsing function by using a markup document.

14. The reproducing apparatus according to claim 12 or 13, wherein the reproducing unit (530) continuously reproduces at least one piece of the image data (140) in the searched sections by using the event.

15. The reproducing apparatus according to any of claims 12 to 14, wherein the reproducing unit (530) reproduces one of the pieces of the image data (140) in the searched sections and returns to a searching menu for a user's selection at a time of ending reproducing the image data (140) by using the event.
